# EUROPEAN PATENT SPECIFICATION

(11) **EP 2 971 990 B1**
(45) Date of publication and mention of the grant of the patent: **28.08.2019**
(21) Application number: 14721959.6
(22) Date of filing: 11.03.2014
(51) Int. Cl.: F24F 12/00

(54) **COMPACT HEAT RECOVERY VENTILATION UNIT**
KOMPAKTE WÄRMERÜCKGEWINNUNGSBELÜFTUNGSEINHEIT
UNITÉ DE VENTILATION À RÉCUPÉRATION DE CHALEUR COMPACTE

(30) Priority: 12.03.2013 EP 13001248
(43) Date of publication of application: 20.01.2016
(73) Proprietor: Zehnder Group International AG, 5722 Gränichen (CH)
(72) Inventor: WILLERING, Peter, 8033 EH Zwolle (NL); BOXUM, Erik, 7944 NR Meppel (NL)
(74) Representative: Vesterinen, Jussi Tapio
(86) International application number: PCT/IB2014/000278
(87) International publication number: WO 2014/140717

(56) References cited:
- EP-A1- 0 928 932
- EP-A1- 2 244 023
- EP-A2- 2 498 014
- WO-A1-81/03064
- DE-A1- 3 208 392
- JP-A- S53 100 648

## Description

The present invention relates to a ventilation unit for providing supply air, preferably outside air or fresh air, to an apartment or parts thereof and for removing return air, preferably exhaust air or used air, from said apartment or parts thereof.

Heat recovery ventilation units have been used for many years in ventilation systems to recover heat from exhaust air exiting a house or an apartment to the surrounding atmosphere. A heat exchanger is used to transfer heat from the exhaust air exiting the house or the apartment to the outside air entering the house or the apartment. Such ventilation systems comprise an arrangement of ducts for transporting air between selected rooms of an apartment (or house) and the surrounding atmosphere. More precisely, such heat recovery ventilation systems comprise ducts collecting return air (used air) from the rooms, ducts for distributing supply air (fresh air) to the rooms on the one hand, and ducts for transporting exhaust air from the apartment to the atmosphere and ducts for transporting outside air from the atmosphere to the apartment. A heat recovery ventilation unit is located at a crossing point at which the ducts of these four air types meet. Consequently, such heat recovery ventilation units comprise a supply air outlet, a return air inlet, an exhaust air outlet, an outside air inlet and a heat exchanger inside the unit.

DE 32 08 392 discloses a ventilating appliance for ventilating and venting rooms according to the preamble of claim 1. The appliance is characterized by air guiding channels which run essentially diagonally, with the ventilating appliance consisting internally of an upper part and a lower part which are made of a partially flexible, vibration-damping and sound-damping material. Metallic or non-metallic cover plates, in particular the cover surface and the floor plate, are provided in the outer region. Moreover, the front and rear sides are covered with such plates with corresponding openings.

It is an object of the invention to provide a heat recovery ventilation unit which, on the one hand, is compact and which, on the other hand, still allows enough air throughput without requiring too much energy for driving the ventilators in the unit and thus, without creating too much air flow noise.

This object is achieved by a ventilation unit for providing supply air, preferably outside air (fresh air), to an apartment or parts thereof and for removing return air, preferably exhaust air (used air), from said apartment or parts thereof, said ventilation unit comprising:
a supply air outlet for establishing supply air flow communication with said apartment;
a return air inlet for establishing return air flow communication with said apartment;
an exhaust air outlet for establishing exhaust air flow communication with the atmosphere;
an outside air inlet for establishing outside air flow communication with an the atmosphere;
a heat exchanger having first air flow passages and second air flow passages for transferring heat energy form return air entering said first air flow passages and exhaust air leaving said first air flow passages on the one hand, to outside air entering said second air flow passages and supply air leaving said second air flow passages on the other hand;
a first ventilator at a first location within the ventilation unit, for transporting air through a first air flow path starting at said return air inlet, passing through said first air flow passages in the heat exchanger and ending at said exhaust air outlet;
a second ventilator at a second location within the ventilation unit, for transporting air through a second air flow path starting at said outside air inlet, passing through said second air flow passages and ending at said supply air outlet,
wherein said first air flow path and said second air flow path comprise internal air flow ducts having rectangular cross sections,
characterized in that
   a) both said first ventilator and said second ventilator are located downstream of the heat exchanger in their respective air flow paths;
   b) the air flow cross section of said return air inlet (RAI) and the air flow cross section of said outside air inlet are greater than the air flow cross section of said supply air outlet and the air flow cross section of said exhaust air outlet; and
   c) at least a major portion of the entire length of each of the internal air flow ducts of the ventilation unit are of substantially rectangular flow cross section.

Due to the rectangular cross sections of the internal air flow ducts, the ducts can be arranged in a very compact manner within the housing of the heat recovery ventilation unit of the invention, thus allowing relatively large duct cross sections within a minimum of equipment space. As a result, a very compact heat recovery ventilation unit is achieved without reducing the performance with respect to air throughput and noise generation. Given the fact that the return air duct portions and the outside air duct portions are driven in suction mode with respect to atmospheric pressure, the greater cross sections in these duct portions minimize overall pressure drop in the first air flow path driven by the first ventilator, on the one hand, and overall pressure drop in the second air flow path driven by the second ventilator, on the other hand. Again, this improves the performance of the unit with respect to air throughput and noise generation. The features under bullet point c) contribute to the compactness of the heat recovery ventilation unit without reducing the performance in respect of air throughput and noise generation.

Preferably, in the ventilation unit according to the invention, said supply air outlet, said return air inlet, said exhaust air outlet and said outside air inlet all have substantially rectangular air flow cross sections.

Preferably, the ventilation unit comprises an optional bypass air flow path bypassing said heat exchanger. More preferably, said bypass flow path comprises two separate flow paths symmetrically bypassing said heat exchanger. Again, this improves the performance of the unit with respect to air throughput and noise generation.

Preferably, a bypass valve is provided which can be moved from a first valve position allowing return air to pass through the heat exchanger along said first air flow path and allowing outside air to pass through the heat exchanger along said second air flow path, to a second valve position allowing return air to bypass the heat exchanger along said first air flow path and allowing outside air to bypass the heat exchanger along said second air flow path. More preferably, said bypass valve is associated to a valve drive unit acting on said bypass valve, and wherein said valve drive unit is located inside the ventilation unit at a central location halfway in between said first air flow path and said second air flow path. This contributes to the compactness of the unit. Preferably, in the ventilation unit according to the invention, at least 80% of the entire length of each of the internal air flow ducts of the ventilation unit are of substantially rectangular flow cross section. Again, this contributes to the compactness of the heat recovery ventilation unit without reducing the performance with respect to air throughput and noise generation.

Preferably, in the ventilation unit according to the invention, said first air flow path and said second air flow path are arranged in a rotationally symmetrical manner with respect to each other with respect to an axis of rotation extending through the ventilation unit and with respect to a 180° rotation of the ventilation unit around said axis of rotation. This improves the versatility of the heat recovery unit with respect to its installation in an apartment.

Preferably, in the ventilation unit according to the invention, a control unit, preferably having a control panel and/or a display panel, for controlling active elements of the ventilation unit such as said first ventilator, said second ventilator and said bypass valve, can be installed at a first location of the ventilation unit or at a second location of the ventilation unit, said first location and said second location being arranged in a rotationally symmetrical manner with respect to each other with respect to said axis of rotation extending through the ventilation unit and with respect to said 180° rotation of the ventilation unit around said axis of rotation. Again, this contributes to the versatility of the heat recovery unit with respect to its installation in an apartment.

Preferably, in the ventilation unit according to the invention, said first ventilator and said second ventilator are arranged in a rotationally symmetrical manner with respect to each other with respect to said axis of rotation extending through the ventilation unit and with respect to a 180° rotation of the ventilation unit around said axis of rotation. Again, this contributes to the versatility of the heat recovery unit with respect to its installation in an apartment.

Preferably, in the ventilation unit according to the invention, said second ventilator can be installed in a first orientation or in a second orientation at its location within the ventilation unit, and wherein a first supply air outlet and a second supply air outlet are provided at different locations within the ventilation unit, said first orientation and said second orientation preferably being opposite to each other. Again, this contributes to the versatility of the heat recovery unit with respect to its installation in an apartment.

### Brief description of the drawings:

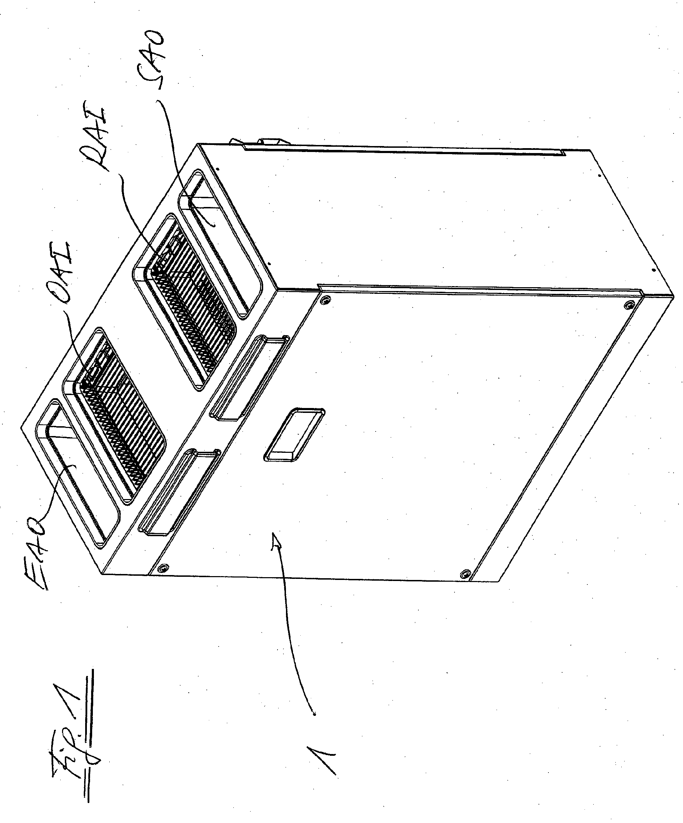

Fig. 1 is a perspective view of an embodiment of the heat recovery ventilation unit according to the invention.

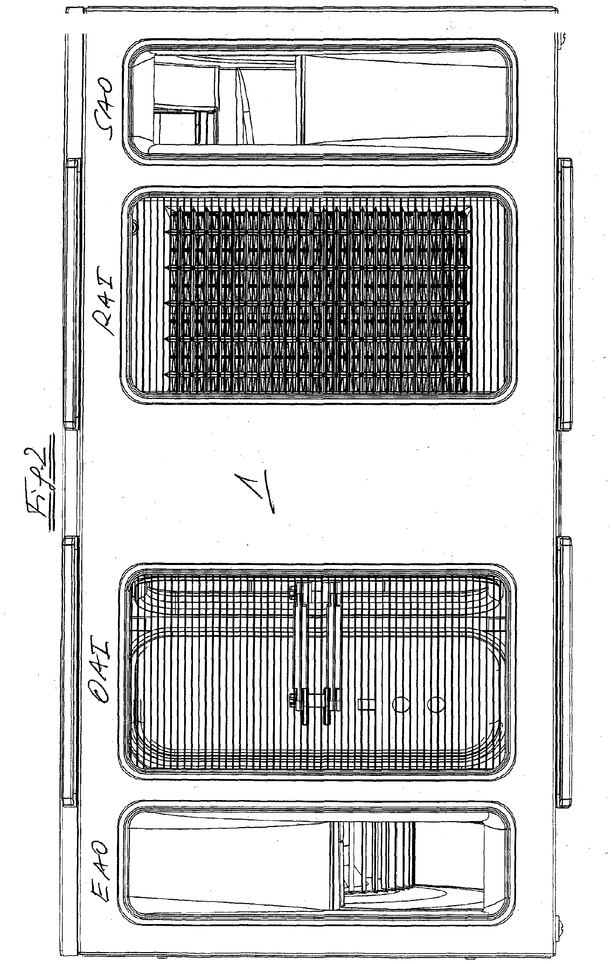

Fig. 2 is a top view of the embodiment of the heat recovery ventilation unit according to the invention.

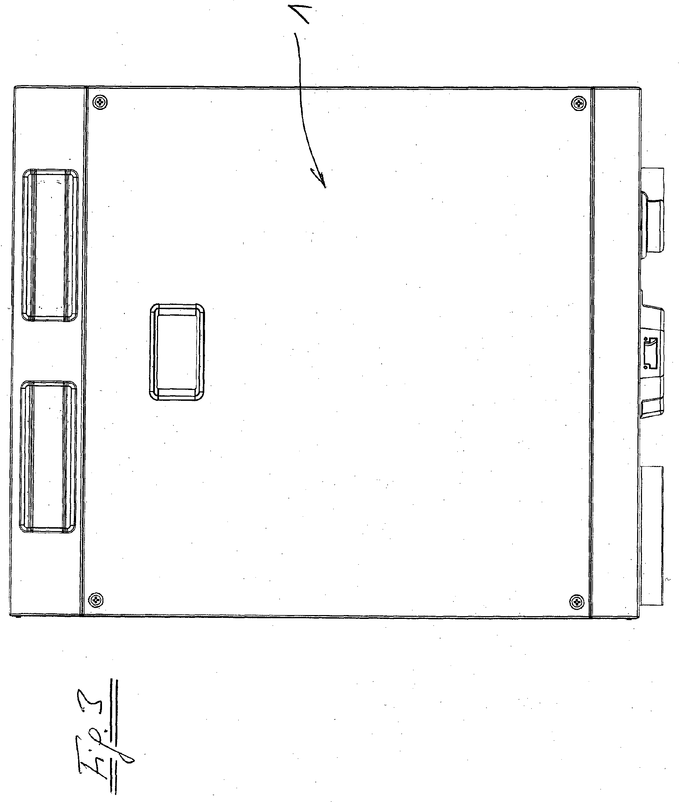

Fig. 3 is a front view of the embodiment of the heat recovery ventilation unit according to the invention.

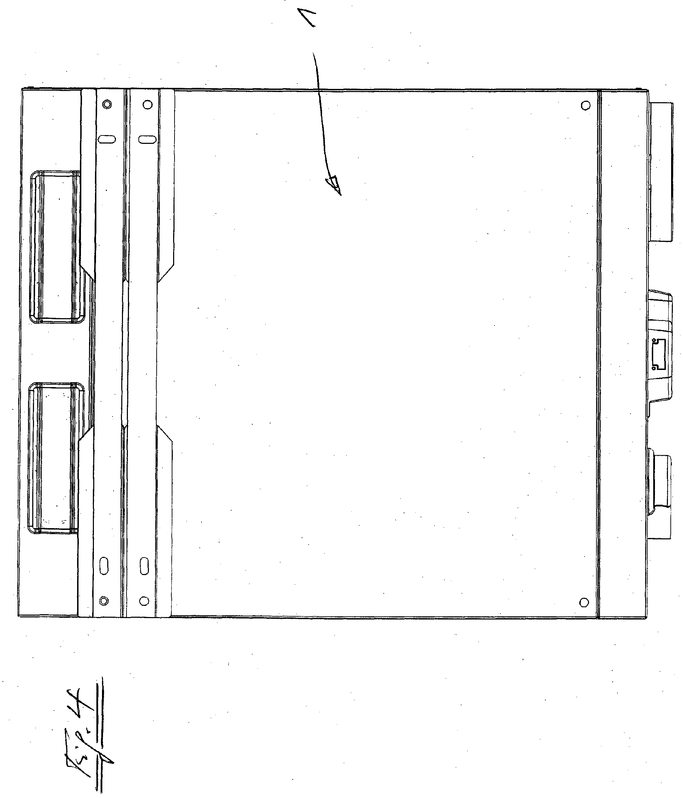

Fig. 4 is a rear view of the embodiment of the heat recovery ventilation unit according to the invention.

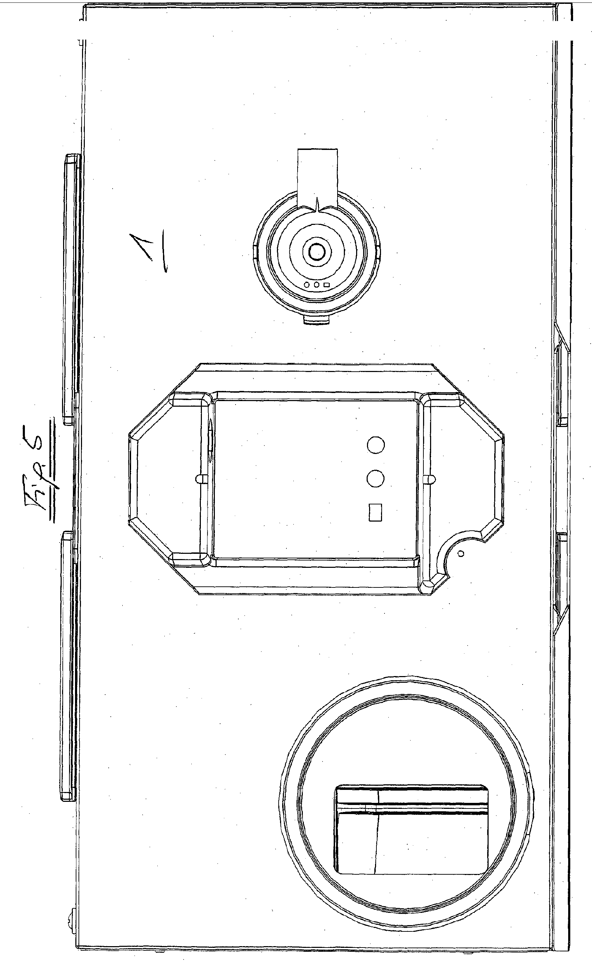

Fig. 5 is a bottom view of the embodiment of the heat recovery ventilation unit according to the invention.

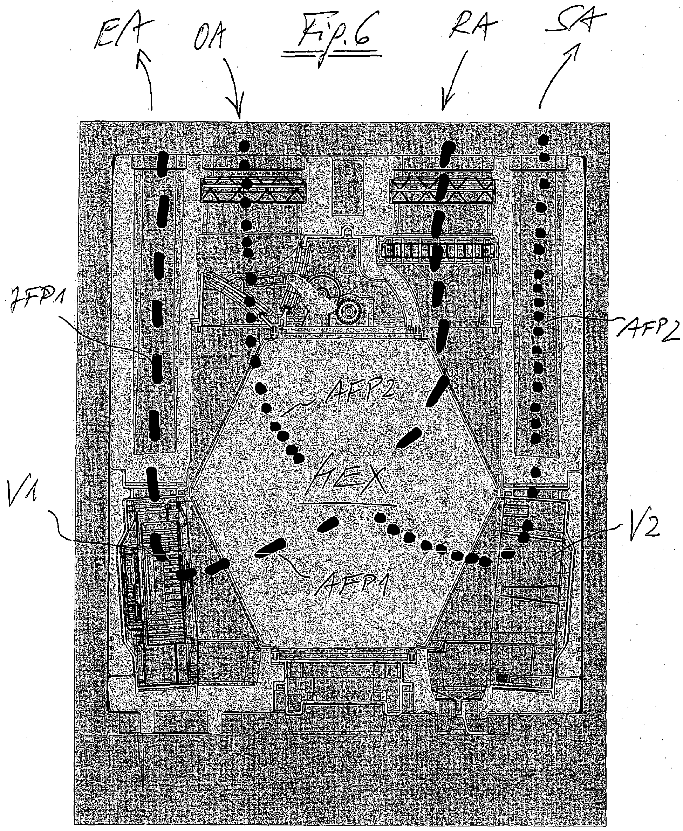

Fig. 6 is a front view, with the front cover removed, of the embodiment of the heat recovery ventilation unit according to the invention.

The heat recovery ventilation unit 1 provides supply air SA, preferably outside air or fresh air, to an apartment or parts thereof, and removes return air RA, preferably exhaust air or used air, from said apartment or parts thereof.

The ventilation unit 1 comprises a supply air outlet SAO for establishing supply air flow communication with said apartment, a return air inlet RAI for establishing return air flow communication with said apartment, an exhaust air outlet EAO for establishing exhaust air flow communication with the atmosphere, and an outside air inlet OAI for establishing outside air flow communication with the atmosphere.

In addition, the unit 1 comprises heat exchanger HEX having first air flow passages (not shown) and second air flow passages (not shown) for transferring heat energy from return air entering said first air flow passages and exhaust air leaving said first air flow passages on the one hand, to outside air entering said second air flow passages and supply air leaving said second air flow passages on the other hand, is provided in the heat recovery ventilation unit. In addition, the unit 1 comprises a first ventilator V1 at a first location within the ventilation unit 1, for transporting air through a first air flow path AFP1 starting at said return air inlet RAI, passing through said first air flow passages in the heat exchanger HEX and ending at said exhaust air outlet EAO, and a second ventilator V2 at a second location within the ventilation unit 1, for transporting air through a second air flow path AFP2 starting at said outside air inlet OAI, passing through said second air flow passages in the heat exchanger HEX and ending at said supply air outlet SAO.

The first air flow path AFP1 and the second air flow path AFP2 comprise internal air flow ducts having rectangular cross sections.

## Claims

1. A ventilation unit (1) for providing supply air, preferably outside air (fresh air), to an apartment or parts thereof and for removing return air, preferably exhaust air (used air), from said apartment or parts thereof, said ventilation unit comprising:
a supply air outlet (SAO) for establishing supply air flow communication with said apartment;
a return air inlet (RAI) for establishing return air flow communication with said apartment;
an exhaust air outlet (EAO) for establishing exhaust air flow communication with the atmosphere;
an outside air inlet (OAI) for establishing outside air flow communication with the atmosphere;
a heat exchanger (HEX) having first air flow passages and second air flow passages for transferring heat energy from return air (RA) entering said first air flow passages and exhaust air (EA) leaving said first air flow passages on the one hand, to outside air (OA) entering said second air flow passages and
supply air (SA) leaving said second air flow passages on the other hand;
a first ventilator (V1) at a first location within the ventilation unit (1), for transporting air through a first air flow path (AFP1) starting at said return air inlet (RAI), passing through said first air flow passages in the heat exchanger (HEX) and ending at said exhaust air outlet (EAO);
a second ventilator (V2) at a second location within the ventilation unit (1), for transporting air through a second air flow path starting at said outside air inlet (OAI), passing through said second air flow passages in the heat exchanger (HEX) and ending at said supply air outlet (SAO),
wherein said first air flow path (AFP1) and said second air flow path (AFP2) comprise internal air flow ducts having rectangular cross sections,
**characterized in that**
a) both said first ventilator (V1) and said second ventilator (V2) are located downstream of the heat exchanger (HEX) in their respective air flow paths (AFP1, AFP2);
b) the air flow cross section of said return air inlet (RAI) and the air flow cross section of said outside air inlet (OAI) are greater than the air flow cross section of said supply air outlet (SAO) and the air flow cross section of said exhaust air outlet (EAO); and
c) at least a major portion of the entire length of each of the internal air flow ducts of the ventilation unit (1) is of substantially rectangular flow cross section.

2. The ventilation unit as defined in claim 1, wherein said supply air outlet (SAO), said return air inlet (RAI), said exhaust air outlet (EAO) and said outside air inlet (OAI) all have substantially rectangular air flow cross sections.

3. The ventilation unit as defined in claim 1 or 2, wherein the ventilation unit comprises a bypass air flow path bypassing said heat exchanger.

4. The ventilation unit as defined in claim 3, wherein said bypass air flow path comprises two separate flow paths symmetrically bypassing said heat exchanger.

5. The ventilation unit as defined in claim 3 or 4, wherein a bypass valve is provided which can be moved from a first valve position allowing return air (RA) to pass through the heat exchanger (HEX) along said first air flow path (AFP1) and allowing outside air (OA) to pass through the heat exchanger (HEX) along said second air flow path (AFP2), to a second valve position allowing return air (RA) to bypass the heat exchanger (HEX) along said first air flow path (AFP1) and allowing outside air (OA) to bypass the heat exchanger (HEX) along said second air flow path (AFP2).

6. The ventilation unit as defined in claim 5, wherein said bypass valve is associated to a valve drive unit acting on said bypass valve, and wherein said valve drive unit is located inside the ventilation unit at a central location halfway in between said first air flow path (AFP1) and said second air flow path (AFP2).

7. The ventilation unit as defined in any one of claims 1 to 6, wherein the at least major portion is at least 80% of the entire length of each of the internal air flow ducts of the ventilation unit.

8. The ventilation unit as defined in any one of claims 1 to 7, wherein said first air flow path (AFP1) and said second air flow path (AFP2) are arranged in a rotationally symmetrical manner with respect to each other with respect to an axis of rotation extending through the ventilation unit and with respect to a 180° rotation of the ventilation unit around said axis of rotation.

9. The ventilation unit as defined in claim 8, wherein a control unit, preferably having a control panel and/or a display panel, for controlling active elements of the ventilation unit such as said first ventilator, said second ventilator and said bypass valve, can be installed at a first location of the ventilation unit or at a second location of the ventilation unit, said first location and said second location being arranged in a rotationally symmetrical manner with respect to each other with respect to said axis of rotation extending through the ventilation unit and with respect to said 180° rotation of the ventilation unit around said axis of rotation.

10. The ventilation unit as defined in any one of claims 1 to 9, wherein said first ventilator and said second ventilator are arranged in a rotationally symmetrical manner with respect to each other with respect to said axis of rotation extending through the ventilation unit and with respect to a 180° rotation of the ventilation unit around said axis of rotation.

11. The ventilation unit as defined in any one of claims 1 to 10, wherein said second ventilator can be installed in a first orientation or in a second orientation at its location within the ventilation unit, and wherein a first supply air outlet and a second supply air outlet are provided at different locations within the ventilation unit, said first orientation and said second orientation preferably being opposite to each other.

## Patentansprüche

1. Eine Belüftungseinheit (1) zur Versorgung einer Wohnung oder Teilen davon mit Zuluft, vorzugsweise Luft von außerhalb (frische Luft), und zum Entfernen von Abluft, vorzugsweise ausgeschöpfter Luft (verbrauchter Luft), aus der genannten Wohnung oder Teilen davon, die genannte Belüftungseinheit umfassend:
einen Zuluftauslass (SAO) zur Herstellung einer Verbindung der Luftzufuhr mit der genannten Wohnung;
einen Ablufteinlass (RAI) zur Herstellung einer Verbindung der Abluftabfuhr mit der genannten Wohnung;
einen Abluftauslass (EAO) zur Herstellung einer Verbindung der Abluftabfuhr mit der Atmosphäre;
einen Aussenlufteinlass (OAI) zur Herstellung der Verbindung der Aussenluftzufuhr mit der Atmosphäre;
einen Wärmeaustauscher (HEX) mit ersten Luftstromdurchgängen und zweiten Luftstromdurchgängen zur Übertragung von Wärmeenergie einerseits aus der in den genannten ersten Luftstromdurchgängen einströmende Abluft (RA) und der aus den genannten ersten Luftstromdurchgängen ausströmenden Abluft (EA), und andererseits zur der in den genannten zweiten Luftstromdurchgängen einströmenden Außenluft (OA) und der in den genannten zweiten Luftstromdurchgängen ausströmenden Zuluft (SA);
einen ersten Ventilator (V1) an einer ersten Stelle innerhalb der Belüftungseinheit (1) zum Transport von Luft durch einen ersten Luftstromweg (AFP1) von dem genannten Ablufteinlass (RAI) ab, durch die genannten ersten Luftstromdurchgänge im Wärmeaustauscher (HEX), und bis zu dem genannten Abluftauslass (EAO);
einen zweiten Ventilator (V2) an einer zweiten Stelle innerhalb der Belüftungseinheit (1) zum Transport von Luft durch einen zweiten Luftstromweg von dem genannten Aussenlufteinlass (OAI) ab, durch die genannten zweiten Luftstromdurchgänge im Wärmeaustauscher (HEX), und bis zu dem genannten Zuluftauslass (SAO),
wobei der genannte erste Luftstromweg (AFP1) und der genannte zweite Luftstromweg (AFP2) interne Luftstromkanäle mit rechteckigem Querschnitt umfassen,
**dadurch gekennzeichnet, dass**
sich der genannte erste Ventilator (V1) und der genannte zweite Ventilator (V2) beide stromabwärts in ihren jeweiligen Luftstromwegen (AFP1, AFP2) vom Wärmeaustauscher (HEX) befinden;
der Luftstromquerschnitt des genannten Ablufteinlasses (RAI) und der Luftstromquerschnitt des genannten Aussenlufteinlasses (OAI) größer sind als der Luftstromquerschnitt des genannten Zuluftauslasses (SAO) und der Luftstromquerschnitt des Abluftauslasses (EAO); und
zumindest ein großer Teil der gesamten Länge von jedem der internen Luftstromkanäle der Belüftungseinheit (1) im wesentlichen einen rechteckigen Strömungsquerschnitt hat.

2. Die Belüftungseinheit nach Anspruch 1, wobei der genannte Zuluftauslass (SAO), der genannte Ablufteinlass (RAI), der genannte Abluftauslass (EAO) und der genannte Aussenlufteinlass (OAI) alle im wesentlichen rechteckige Luftstromquerschnitte haben.

3. Die Belüftungseinheit nach Anspruch 1 oder 2, wobei die Belüftungseinheit einen Bypass-Luftstromweg umfasst, der den genannten Wärmeaustauscher umgeht.

4. Die Belüftungseinheit nach Anspruch 3, wobei der genannte Bypass-Luftstromweg zwei separate Strömungswege umfasst, die den genannten Wärmeaustauscher symmetrisch umgehen.

5. Die Belüftungseinheit nach Anspruch 3 oder 4, wobei ein Bypassventil verfügbar ist, das von der ersten Position des Ventils, die es ermöglicht, Abluft (RA) durch den Wärmeaustauscher (HEX) entlang dem genannten ersten Luftstromweg (AFP1) zu strömen, und ermöglicht, Außenluft (OA) durch den Wärmeaustauscher (HEX) entlang dem genannten zweiten Luftstromweg (AFP2) zu strömen, auf eine zweite Ventil Position gestellt werden kann, die es der Abluft (RA) ermöglicht, den Wärmeaustauscher (HEX) entlang dem genannten ersten Luftstromweg (AFP1) zu umgehen, und es der Außenluft (OA) ermöglicht, den Wärmeaustauscher (HEX) entlang dem genannten zweiten Luftstromweg (AFP2) zu umgehen.

6. Die Belüftungseinheit nach Anspruch 5, wobei genanntes Bypassventil einer Ventilantriebseinheit angegliedert ist, die auf das genannte Bypassventil wirkt, und wobei die genannte Ventilantriebseinheit sich innerhalb der Belüftungseinheit an einer zentralen Stelle halbwegs zwischen dem genannten ersten Luftstromweg (AFP1) und dem genannten zweiten Luftstromweg (AFP2) befindet.

7. Die Belüftungseinheit nach einem der Ansprüche 1 bis 6, wobei der mindest größere Teil mindestens 80% der gesamten Länge von jedem der einzelnen internen Luftstromkanäle der Belüftungseinheit einnimmt.

8. Die Belüftungseinheit nach einem der Ansprüche 1 bis 7, wobei der genannte erste Luftstromweg (AFP1) und der genannte zweite Luftstromweg (AFP2) in einer rotationssymmetrischen Weise zueinander bezüglich einer Rotationsachse, die durch die Belüftungseinheit geht, und bezüglich einer 180°-Rotation der Belüftungseinheit um die genannte Rotationsachse angeordnet sind.

9. Die Belüftungseinheit nach Anspruch 8, wobei eine Steuereinheit, vorzugsweise mit einem Schaltpult und/oder einer Anzeigetafel, zur Steuerung von aktiven Elementen der Belüftungseinheit wie der genannte erste Ventilator, der genannte zweite Ventilator und das genannte Bypassventil, an einer ersten Stelle der Belüftungseinheit oder an einer zweiten Stelle der Belüftungseinheit installiert werden kann, mit der genannten ersten Stelle und der genannten zweiten Stelle in einer rotationssymmetrischen Weise zueinander bezüglich einer Rotationsachse, die durch die Belüftungseinheit geht, und bezüglich einer 180°-Rotation der Belüftungseinheit um genannte Rotationsachse angeordnet.

10. Die Belüftungseinheit nach einem der Ansprüche 1 bis 9, wobei der genannte erste Ventilator und der genannte zweite Ventilator in einer rotationssymmetrischen Weise zueinander bezüglich einer Rotationsachse, die durch die Belüftungseinheit geht, und bezüglich einer 180°-Rotation der Belüftungseinheit um genannte Rotationsachse angeordnet sind.

11. Die Belüftungseinheit nach einem der Ansprüche 1 bis 10, wobei der genannte zweite Ventilator in einer ersten Orientierung oder in einer zweiten Orientierung an seiner Stelle innerhalb der Belüftungseinheit installiert werden kann, und wobei sich ein erster Zuluftauslass und ein zweiter Zuluftauslass an verschiedenen Stellen innerhalb der Belüftungseinheit befinden, wobei die genannte erste Orientierung und die genannte zweite Orientierung vorzugsweise einander entgegengesetzt sind.

## Revendications

1. Une unité de ventilation (1) destinée à fournir de l'air d'apport, de préférence de l'air extérieur (l'air frais) à un appartement ou des parties associées, et à retirer l'air de retour, de préférence l'air évacué (l'air usé) provenant dudit appartement ou desdites parties associées, ladite unité de ventilation comprenant :
une sortie d'air d'apport (SAO) pour établir une communication entre le flux d'air d'apport et ledit appartement ;
une entrée d'air de retour (RAI) pour établir une communication entre le flux d'air de retour et ledit appartement ;
une sortie d'air d'évacuation (EAO) pour établir une communication entre le flux d'air d'évacuation et l'atmosphère ;
une entrée d'air extérieur (OAI) pour établir une communication entre le flux de l'air extérieur et l'atmosphère ;
un échangeur de chaleur (HEX) comportant des premiers passages de flux d'air et des deuxièmes passages de flux d'air pour transférer une énergie thermique de l'air de retour (RA) entrant dans lesdits premiers passages de flux d'air et l'air d'évacuation (EA) sortant desdits premiers passages de flux d'air, d'une part, à l'air extérieur entrant dans lesdits deuxièmes passages de flux d'air et l'air d'apport sortant desdits deuxièmes passages de flux d'air, d'autre part ;
un premier ventilateur (V1) disposé au niveau d'un premier emplacement à l'intérieur de l'unité de ventilation (1), destiné à transporter l'air à travers un premier circuit de flux d'air (AFP1) à partir de ladite entrée d'air de retour (RAI), passant à travers lesdits premiers passages de flux d'air dans l'échangeur de chaleur (HEX) et se terminant au niveau de ladite sortie d'air d'évacuation (EAO) ;
un deuxième ventilateur (V2) disposé au niveau d'un deuxième emplacement à l'intérieur de l'unité de ventilation (1), destiné à transporter l'air à travers un deuxième circuit de flux d'air à partir de ladite entrée d'air extérieur (OAI), passant à travers lesdits deuxièmes passages de flux d'air dans l'échangeur de chaleur (HEX) et se terminant au niveau de ladite sortie d'air d'apport (SAO),
dans laquelle ledit premier circuit de flux d'air (AFP1) et ledit deuxième circuit de flux d'air (AFP2) comprennent des conduits de flux d'air internes comportant des sections transversales rectangulaires,
**caractérisée en ce que**
a) ledit premier ventilateur (V1) et ledit deuxième ventilateur (V2) sont situés dans leur circuits de flux d'air (AFP1, AFP2) respectifs en aval de l'échangeur de chaleur (HEX) ;
b) la section transversale de flux d'air de ladite entrée d'air de retour (RAI) et la section transversale de flux d'air de ladite entrée d'air extérieur (OAI) sont supérieures à la section transversale de flux d'air de ladite sortie d'air d'apport (SAO) et à la section transversale de flux d'air de ladite sortie d'air d'évacuation (EAO) ; et
c) dans laquelle au moins une majeure partie de la longueur totale de chacun des conduits de flux d'air internes de l'unité de ventilation (1) ont une section transversale sensiblement rectangulaire.

2. L'unité de ventilation selon la revendication 1, dans laquelle ladite sortie d'air d'apport (SAO), ladite entrée d'air de retour (EAO), ladite sortie d'air d'évacuation (EAO) et ladite entrée d'air extérieur (OAI) ont toutes des sections transversales de flux d'air sensiblement rectangulaires.

3. L'unité de ventilation selon la revendication 1 ou 2, dans laquelle l'unité de ventilation comprend un circuit de flux d'air de dérivation contournant ledit échangeur de chaleur.

4. L'unité de ventilation selon la revendication 3, dans laquelle ledit circuit de flux d'air de dérivation comprend deux circuits de flux séparés contournant symétriquement ledit échangeur de chaleur.

5. L'unité de ventilation selon la revendication 3 ou 4, dans laquelle il est prévu une vanne de dérivation qui peut être déplacée d'une première position de vanne permettant à l'air de retour (RA) de traverser l'échangeur de chaleur le long dudit premier circuit de flux d'air (AFP1) et permettant à l'air extérieur (OA) de traverser l'échangeur de chaleur le long dudit deuxième circuit de flux d'air (AFP2), jusqu'à une deuxième position de vanne permettant à l'air de retour (RA) de contourner l'échangeur de chaleur le long dudit premier circuit de flux d'air (AFP1) et permettant à l'air extérieur (OA) de contourner l'échangeur de chaleur le long dudit deuxième circuit de flux d'air (AFP2).

6. L'unité de ventilation selon la revendication 5, dans laquelle ladite vanne de dérivation est associée à une unité d'actionnement de vanne agissant sur ladite vanne de dérivation, et dans laquelle ladite unité d'actionnement de vanne est située à l'intérieur de l'unité de ventilation en un emplacement central à mi-distance entre ledit premier circuit de flux d'air (AFP1) et ledit deuxième circuit de flux d'air (AFP2).

7. L'unité de ventilation selon l'une quelconque des revendications 1 à 6, dans laquelle l'au moins une majeure partie est d'au moins 80% de la longueur totale de chacun des conduits de flux d'air internes de l'unité de ventilation.

8. L'unité de ventilation selon l'une quelconque des revendications 1 à 7, dans laquelle le premier circuit de flux d'air (AFP1) et ledit deuxième circuit de flux d'air (AFP2) sont agencés de manière à présenter une symétrie de révolution l'un par rapport à l'autre par rapport à un axe de rotation s'étendant à travers l'unité de ventilation et par rapport à une rotation de 180° de l'unité de ventilation autour dudit axe de rotation.

9. L'unité de ventilation selon la revendication 8, dans laquelle une unité de commande, comportant de préférence un panneau de commande et/ou un panneau d'affichage, pour commander des éléments actifs de l'unité de ventilation tel que ledit premier ventilateur, ledit deuxième ventilateur et ladite vanne de dérivation, peut être installée à un premier emplacement de l'unité de ventilation ou à un deuxième emplacement de l'unité de ventilation, ledit premier emplacement et ledit deuxième emplacement étant agencés de manière à présenter une symétrie de révolution l'un par rapport à l'autre par rapport audit axe de rotation s'étendant à travers l'unité de ventilation et par rapport à ladite rotation de 180° de l'unité de ventilation autour dudit axe de rotation.

10. L'unité de ventilation selon l'une quelconque des revendications 1 à 9, dans laquelle ledit premier ventilateur et ledit deuxième ventilateur sont agencés de manière à présenter une symétrie de révolution l'un par rapport à l'autre par rapport audit axe de rotation s'étendant à travers l'unité de ventilation et par rapport à une rotation de 180° de l'unité de ventilation autour dudit axe de rotation.

11. L'Unité de ventilation selon l'une quelconque des revendications 1 à 10, dans laquelle ledit deuxième ventilateur peut être installé dans une première orientation ou dans une deuxième orientation à son emplacement dans l'unité de ventilation, et dans laquelle une première sortie d'air d'apport et une deuxième sortie d'air d'apport sont prévues à différents endroits dans l'unité de ventilation, ladite première orientation et ladite deuxième orientation étant de préférence opposées l'une par rapport à l'autre.
